# EUROPÄISCHE PATENTANMELDUNG

(11) **EP 2 008 512 A1**
(43) Veröffentlichungstag der Anmeldung: **31.12.2008**
(21) Anmeldenummer: 08011408.5
(22) Anmeldetag: 24.06.2008
(51) Int. Cl.: A01K 13/00

(54) **Verfahren und Vorrichtung zum Bürsten von Tieren**

(30) Priorität: 26.06.2007 DE 102007029555
(71) Anmelder: Baß Antriebstechnik GmbH, 91607 Gebsattel (DE)
(72) Erfinder: Baß, Peter, 91607 Gebsattel (DE)
(74) Vertreter: Küchler, Stefan

(57) **Zusammenfassung**

Die Erfindung richtet sich auf ein Verfahren und eine Vorrichtung zum Bürsten von Tieren (1), insbesondere von Schweinen, mit wenigstens einer rotierenden Bürste (2,3), die motorisch antreibbar ist/sind; das erfindungsgemäße Verfahren zeichnet sich dadurch aus, dass ein räumlich begrenztes Umfeld der Bürste(n) (2,3) im Hinblick auf die Anwesenheit und/oder auf Bewegungen von nicht zur Bürstvorrichtung gehörenden Objekten, insbesondere Tieren, überwacht wird, und bei Erfassen einer solchen Bewegung die Bürste(n) (2,3) in Rotation versetzt wird/werden; die erfindungsgemäße Vorrichtung zeichnet sich aus durch eine Einrichtung zur Überwachung eines räumlich begrenzten Umfeldes der Bürste(n) (2,3) im Hinblick auf die Anwesenheit und/oder auf Bewegungen von nicht zur Bürstvorrichtung (1) gehörenden Objekten, und zum Einschalten der Bürste(n) (2,3) bei Erfassen einer solchen Bewegung innerhalb des übervvachten Bereichs.

## Beschreibung

Die Erfindung richtet sich auf ein Verfahren und eine Vorrichtung zum Bürsten von Tieren, insbesondere von Schweinen, mit wenigstens einer rotierenden Bürste, die motorisch antreibbar ist/sind.

Motorisch angetriebene Vorrichtungen zum Bürsten von Tieren, insbesondere von Rindern, sind bekannt, bspw. durch das Patent Nr. 10 2006 012 261 der Anmelderin. Der mit zwei Bürsten - einer mit einer vertikalen Rotationsachse und einer mit einer etwa horizontalen Rotationsachse - ausgestattete Bürstenkopf ist an einer Schwinge befestigt, die entlang einer Kurvenbahn angehoben werden kann. Wenn ein Rind sich unter die etwa horizontale Bürste stellt und dabei die gesamte Schwinge anhebt, wird dabei ein Schalter betätigt - die Bürsten werden in Rotation versetzt und das Rind gebürstet.

Aus der DE 100 02 688 A1 ist eine Rinder-Reinigungs-Vorrichtung vorbekannt, umfassend einen Trägerrahmen mit einer Parallelogramm-Rahmenkonstruktion, mit einem reziprozierbar schwenkbaren Schenkel, an dem zwei zueinander in einem vorgegebenen Winkel stehende, drehbar gelagerte, von einer Motoreinrichtung betriebene und mit Borsten versehene Walzen befestigt sind. Die Parallelogramm-Rahmenkonstruktion ist mit mindestens einer Feder versehen, deren eines Ende an dem Trägerrahmen und deren anderes Ende an dem Schenkel befestigt ist. Im Bereich der Parallelogramm-Rahmenkonstruktion ist ein Kontaktgeber vorgesehen, der von einem an dem Schenkel befestigten Kontaktelement kontaktierbar ist. Ferner ist eine Zeitgebereinrichtung vorgesehen, welche die Motoreinrichtung nach Ablauf einer vorgegebenen Zeitspanne abschaltet. Auch bei dieser Anordnung werden die Bürsten erst in Rotation versetzt, sobald ein Rind sich unter die Bürsten stellt und den reziprozierbaren Schenkel anhebt, wodurch der Kontakt geschlossen wird und den Motor für eine vorgegebene Zeitspanne einschaltet.

Alle diese Mechanismen funktionieren zwar bei Rindern gut. Will man eine solche Vorrichtung jedoch auch zum Bürsten von Hausschweinen verwenden, so ergeben sich Probleme. Denn Schweine stellen sich häufig eben nicht unter die Bürste, um die Schwinge anzuheben und sich bürsten zu lassen, sondern oft versuchen sie stattdessen, die still stehenden Bürsten anzuknabbern und wegzufressen.

Aus diesen Nachteilen des bekannten Standes der Technik resultiert das die Erfindung initiierende Problem, wie eine gattungsgemäße Vorrichtung betrieben bzw. ausgestattet werden kann, um beim Einsatz in einem Schweinestall das Abfressen der Borsten von den Bürsten zu vermeiden.

Die Lösung dieses Problems gelingt im Rahmen eines gattungsgemäßen Verfahrens dadurch, dass ein räumlich begrenztes Umfeld der Bürste(n) im Hinblick auf die Anwesenheit und/oder auf Bewegungen von nicht zur Bürstvorrichtung gehörenden Objekten, insbesondere Tieren, überwacht wird, und bei Erfassen einer solchen Bewegung bzw. Annäherung die Bürste(n) in Rotation versetzt wirdlwerden.

Indem solchermaßen die Bürsten nicht erst beim Anheben einer dieselben tragenden Schwinge in Rotation versetzt werden, sondern bereits deutlich früher, nämlich jedes Mal dann, wenn sich ein Tier der Bürstvorrichtung nähert bzw. in deren überwachte Umgebung eindringt, findet das Tier bei jeder Annäherung stets rotierende Bürsten vor und hat daher keine Gelegenheit, sich dieselben schmecken zu lassen.

Es hat sich als günstig erwiesen, dass die Bürste(n) so lange eingeschaltet bleibt (-en), bis mindestens eine vorgegebene Zeitspanne verstrichen ist. Der Beginn dieser abzuwartenden Zeitspanne kann auf den Einschaltzeitpunkt der Vorrichtung gelegt werden, damit die eingeschaltete Vorrichtung nicht sofort wieder ausgeschaltet werden kann. Andererseits besteht auch die Möglichkeit, eine Zeitmessung nach dem Sensieren der letzten Bewegung eines vorrichtungsfremden Objektes innerhalb des überwachten Bereichs bzw. nach dem Verlassen des überwachten Bereichs zu starten und damit die Abschaltung zu verzögern. Damit können kurze Pausen im Sensorausgangssignal - bspw. wenn das Tier kurzzeitig reglos vertiarrt - überbrückt werden; es wird eine Hysterese geschaffen, die u.a. verhindert, dass ein in der Nähe der Vorrichtung stehendes Tier kurz hintereinander sich wiederholende Ein- und Abschaltvorgänge der Vorrichtung auslöst.

Weiterhin ist vorgesehen, dass die Rotationsbewegung der rotierenden Bürste(n) nicht als Bewegung interpretiert wird. Diese Maßnahme ist sehr wichtig, weil ansonsten die rotierenden Bürsten selbst fehlerhaft als sich bewegendes Tier angesehen würden und endlos weiter betrieben würden. Da die einzelnen Borsten der rotierenden Bürsten sehr dünn sind, besteht die Möglichkeit, das von diesen herrührende Sensorausgangssignal mit einem Schwellwert zu vergleichen, welcher oberhalb des die rotierenden Bürsten repräsentierenden Sensorausgangssignals liegt. Evtl. können auch ein oder mehrere Sensoren derart angeordnet werden, dass sich die Bürsten am Rande des von diesen überwachten Bereichs liegen.

Ferner ist wichtig, dass die Überwachung nicht zu sensibel eingestellt ist; insbesondere dürfen weit entfernte Tiere selbst bei stärkeren Bewegungen nicht das Einschalten der Bürstvorrichtung bewirken, um eine Vergeudung von Energie zu vermeiden und die Tiere in einem Stall nicht zu sehr zu beunruhigen. Aus diesem Grund wird der zu überwachende Bereich auf das nähere Umfeld der Bürsten oder eines Teils derselben begrenzt; insbesondere durch Vergleichen des Ausgangssignals / der Ausgangssignale eines oder mehrerer Sensoren mit wenigstens einem vorgegebenen Grenzwert und/oder durch Verwendung eines oder mehrerer Sensoren mit gerichteter Charakteristik.

Es liegt im Rahmen der Erfindung, dass ein begrenzter Bereich überwacht wird, dessen Grenzen sich gegenüber der/den Bürstenrotationsachse(n) nicht bewegen. Solchenfalls wird bspw. ein Schwingen einer beweglich aufgehängten Bürstvorrichtung, insbesondere ein Nachschwingen derselben, nicht als Bewegung interpretiert, so dass weitere Fehler vermieden werden.

Bevorzugt wird nur ein begrenzter Bereich überwacht, der auf einen Ausschnitt bzw. Sektor um die Bürstvorrichtung begrenzt ist. Nicht die gesamte Umgebung der Bürstvorrichtung muß unidirektional gleichmäßig überwacht werden. Eine Bürstvorrichtung wird aufgrund ihres Gewichts aus statischen Gründen fast immer an einer Wand eines Stalles od. dgl. montiert, so dass der Bereich hinter ihrer Montageeinrichtung (die Wand) nicht zu überwachen ist, weil sich von dort ohnehin kein Tier nähern kann. Mehr noch, durch eine solche Überwachung könnten allenfalls Fehler verursacht werden, wenn nämlich das Heben und Senken bzw. (Nach-) Schwingen der Bürstvorrichtung selbst als Bewegung interpretiert würde.

Ferner ist nur ein Bereich bis zu einer Höhe von etwa 1,50 m über dem Boden zu überwachen, vorzugsweise nur bis zu 1,35 m über dem Boden, insbesondere nur bis zu 1,20 m über dem Boden. Da die meisten Haustiere sich nur entlang des Bodens bewegen können, genügt es völlig, die Überwachung auf diesen Bereich zu beschränken.

Entsprechend der begrenzten Ausdehnung einer Bürstvorrichtung für Großtiere, insbesondere für Schweine, braucht nur ein Bereich überwacht zu werden, dessen maximale Erstreckung bzw. Reichweite gleich oder kleiner ist als 1,20 m, vorzugsweise gleich oder kleiner als 1,10 m, insbesondere gleich oder kleiner als 1 m, denn die achsparallele Längserstreckung einer Bürste ist üblicherweise kleiner oder etwa gleich einer solchen Abmessung.

Andererseits sollte nur ein Bereich überwacht werden, dessen maximale Erstreckung bzw. Reichweite wenigstens 0,6 m beträgt, vorzugsweise 0,7 m oder mehr, insbesondere 0,8 m oder mehr. Dadurch können die Bürsten zumindest an ihrer unteren Seite vollständig von dem überwachten Bereich umgeben werden und ein Tier kann sich der Bürstvorrichtung nicht von dieser unbemerkt nähern.

Eine Überwachung ist dann optimal, wenn nur bzw. genau ein Bereich überwacht wird, der sich unterhalb einer Bürste befindet sowie maximal um etwa 60 cm seitlich über deren vertikal nach unten geworfenen Schatten hinausragt, vorzugsweise um maximal 45 cm, insbesondere um maximal 30 cm. Da insbesondere in einem Schweinestall die Platzverhältnisse oftmals etwas beengt sind und die Tiere sich nicht allzuweit von der Bürstvorrichtung entfernen können, sollte die Vorrichtung in der Lage sein, bereits in einem Abstand von etwa 30 bis 60 cm von den Bürsten stehende Tiere zu tolerieren, ohne die Bürstvorrichtung in Bewegung zu versetzen.

Da sich Tiere in beiden Richtungen bürsten lassen können, wobei sie einmal in Richtung vom Kopf zum Schwanz gebürstet werden und das andere mal in entgegengesetzter Richtung, können sie sich der Bürstvorrichtung aus unterschiedlichen Richtungen nähern. Daher sollte ein begrenzter Bereich überwacht werden, der symmetrisch zu einer vertikalen, von wenigstens einer Bürstenrotationsachse aufgespannten Ebene liegt, so dass Tiere rechtzeitig erkannt werden, unabhängig davon, aus welcher Richtung sie sich nähern.

Ferner empfiehlt es sich, die Reichweite des überwachten Bereichs in einer von der/den Rotationsachse(n) der Bürste(n) aufgespannten Ebene maximal zu wählen. Damit wird die längliche Gestalt der Bürsten approximiert, insbesondere durch einen Überwachungsbereich mit einem etwa elliptischen Querschnitt, und auch in einem engen Stall kann die Bürstvorrichtung präzise unterscheiden, ob ein Tier sich einer Bürste in der Absicht des Bürstens oder Fressens nähert oder unbeteiligt neben der Bürste verharrt.

Da der Bürstendurchmesser meist nicht mehr als etwa 50 cm beträgt, genügt es, für die maximale Reichweite des überwachten Bereichs in einer Richtung lotrecht zu einer von der/den Rotationsachse(n) der Bürste(n) aufgespannten Ebene etwa 1,0 m vorzusehen, vorzugsweise 0,9 m oder weniger, insbesondere 0,8 m oder weniger.

Die obigen Randbedingungen lassen sich leicht dadurch verwirklichen, dass nur ein begrenzter Bereich überwacht wird, der etwa die Gestalt eines aus einem Rotationskörper, bspw. aus einer Kugel oder aus einem (dicken) Diskus, ausgeschnittenen Sektors aufweist. Hiervon ist eine diskusförmiger Gestalt des überwachten Sektors zu bevorzugen, entsprechend von dessen elliptischem, an die Gestalt der Bürsten angepaßten Querschnitt.

Es ist ausreichend, nur einen begrenzten Bereich zu überwachen, der innerhalb seiner Symmetrieebene etwa eine kreissektorförmige Gestalt hat, was durch eine etwa konstante Reichweite des/der betreffenden Sensors (-en) innerhalb des überwachten Sektors erreicht werden kann.

Der Zwischenwinkel zwischen zwei Bürsten liegt üblicherweise in der Größenordnung von etwa 90°; meist ist er etwas größer, vielleicht 100° bis 110°. Da nur die Bürsten zu schützen und zu überwachen sind, kann der Überwachungsbereich entsprechend eingegrenzt werden. Im Allgemeinen genügt es sogar, nur einen Bereich zu überwachen, der innerhalb seiner Symmetrieebene einen Kreissektor von maximal 90° bedeckt, vorzugsweise von maximal 80°, insbesondere von maximal 70°, denn der obere Bereich der Bürste mit etwa horizontal ausgerichteter Rotationsachse liegt ohnehin außerhalb der Reichweite der zu bürstenden Tiere und muß daher nicht überwacht werden.

Um andererseits die für die Tiere zugänglichen Bereiche beider Bürsten vollständig in den Überwachungsraum aufzunehmen, ist es empfehlenswert, dass ein Bereich überwacht wird, der etwa einen Zentrumswinket von wenigstens 30° überdeckt, vorzugsweise einen Zentrumswinkel von 45° oder mehr, insbesondere einen Zentrumswinkel von 60° oder mehr.

Zur Überwachung sollten ein oder mehrere, berührungsfreie Sensoren verwendet wird/werden, um Verletzungen der Tiere, die durch mechanische Fühler verursacht werden könnten, zu vermeiden.

Im Rahmen dieses Erfindungsgedankens liegt es, dass zur Überwachung einer Umgebung der Bürstvorrichtung Lichtstrahlen ausgesandt und empfangen werden, vorzugsweise mittels einer oder mehrerer Lichtschranken, insbesondere mittels eines oder mehrerer Lasersensoren. Dabei könnte bspw. der Boden unterhalb der Bürstvorrichtung mit Edelstahl oder einem ähnlichen, reflektierenden Material belegt sein, so dass darauf ein Licht- bzw. Laserstrahl gerichtet werden kann, der bei Abwesenheit eines zu bürstendes Tier reflektiert wird, bei Anwesenheit eines zu bürstenden Tieres dagegen nicht.

Im Rahmen einer anderen Ausführungsform der Erfindung werden zur Überwachung einer Umgebung der Bürstvorrichtung elektromagnetische Wellen ausgesandt und empfangen, insbesondere mittels Radarsensoren. Hiermit lassen sich dreidimensionale Räume überwachen, ähnlich wie bei Türöffner-Sensoren.

Eine wiederum abgewandelte Ausführungsform der Erfindung zeichnet sich dadurch aus, dass zur Überwachung einer Umgebung der Bürstvorrichtung akustische Signale ausgesandt und empfangen werden, insbesondere mittels Ultraschallsensoren. Dieses dem Orientierungssinn von Fledermäusen entsprechende Prinzip erlaubt ebenfalls die Überwachung von dreidimensionalen Bereichen.

Ein eher passives Sensorverfahren besteht darin, zur Überwachung einer Umgebung der Bürstvorrichtung Wärmestrahlen zu detektieren, insbesondere mittels Wärmesensoren. Hiermit kann die Körperwärme von Tieren erkannt werden. Auch die Überwachung dreidimensionaler Bereiche ist möglich. In Weiterverfolgung dieses Erfindungsgedankens hat es sich bewährt, zur Überwachung einer Umgebung der Bürstvorrichtung Infrarotstrahlung zu detektieren, insbesondere mittels Infrarotsensoren

Weitere Vorteile bietet die Verwendung mehrerer, insbesondere zweier Sensoren zur Überwachung eines Bereichs um die Bürstvorrichtung. Damit ist es möglich, je eine Seite der gemeinsamen Bürstenebene (die von den beiden Bürstenachsen aufgespannt wird) zu überwachen, ohne dass die Bürsten selbst im Zentrum des überwachten Bereichs liegen; dies hat den Vorteil, dass die Rotationsbewegung der Bürsten von einem einzelnen Sensor nur relativ schwach wahrgenommen wird und leicht ausmaskiert werden kann.

Ferner ist zu empfehlen, dass die Sensoren zumeist in der Nähe der Rotationsachsen der Bürsten angeordnet sind, so dass diese Rotationsachsen etwa strahlenförmig von dem/den Sensor(en) weg streben. Die Borsten der rotierenden Bürsten bewegen sich auf kreisförmigen Bahnen um die Rotationsachsen, ihr Abstand zu einem Sensor ändert sich dabei nicht. Dies bietet die Möglichkeit, Sensoren zu verwenden, welche Objekte nur dann erkennen, wenn sich deren radialer Abstand zu dem Sensor ändert. Solche Sensoren nehmen dann die um Radialstrahlen rotierenden Borsten nicht wahr. Derartige Sensoren sind bspw. bestimmte Radarsensoren, welche (nur) mit Auswertung der Dopplerfrequenz arbeiten, die bei der Annäherung/Entfernung von Objekten entsteht.

Andererseits können die Ausgangssignale mehrerer Sensoren überlagert werden, insbesondere addiert. Dadurch läßt sich insgesamt innerhalb bzw. entlang der Bürstenebene ein Raum mit einer maximalen Reichweite überwachen, während die Rotationsbewegung der Bürsten nur gering wahrgenommen wird.

Die überlagerten Ausgangssignale mehrerer Sensoren sollten mit einem Schwellwert verglichen werden, um Bewegungen innerhalb des überwachten Bereichs von Bewegungen außerhalb des überwachten Bereichs zu unterscheiden. Der Schwellwert kann evtl. einstellbar sein, so dass bei der Installation einer erfindungsgemäßen Bürstvorrichtung auf die örtlichen Gegebenheiten, insbesondere die Größe des Stalles bzw. Gatters, Rücksicht genommen werden kann.

Eine erfindungsgemäße Vorrichtung zum Bürsten von Tieren, insbesondere von Schweinen, mit wenigstens einer rotierenden Bürste, die motorisch antreibbar ist/sind, zeichnet sich aus durch eine Einrichtung zur Überwachung eines räumlich begrenzten Umfeldes der Bürste(n) im Hinblick auf die Anwesenheit und/oder auf Bewegungen von nicht zur Bürstvorrichtung gehörenden Objekten, und zum Einschalten der Bürste(n) bei Erfassen einer solchen Bewegung bzw. Annäherung innerhalb des überwachten Bereichs.

Dabei ist solchen Sensoren der Vorzug zu geben, welche die Überwachung eines dreidimensionalen Bereichs erlauben.

Weitere Vorteile bietet wenigstens ein berührungsfreier Sensor zur Überwachung einer Umgebung der Bürstvorrichtung im Hinblick auf Bewegungen und/oder die Annäherung von nicht zur Bürstvorrichtung gehörenden Objekten. Solche Sensoren werden im Gegensatz zu mechanischen Fühlern von den Tieren überhaupt nicht wahrgenommen und können daher nicht umgangen werden; außerdem besteht nicht die Gefahr der Verletzung von Tieren.

Als Sensoren kommen optische Sensoren in Betracht, vorzugsweise mit einer Lichtquelle zum Aussenden von Lichtwellen, insbesondere -strahlen, und einem lichtsensitiven Element zum Empfangen von Lichtwellen, insbesondere -strahlen, vorzugsweise nach Art einer Lichtschranke, insbesondere nach Art eines Lasersensors.

Andererseits lassen sich auch elektromagnetische Sensoren verwenden, vorzugsweise mit einer Antenne zum Aussenden von elektromagnetischen Wellen und mit einer Antenne zum Empfangen von elektromagnetischen Wellen, insbesondere nach Art eines Radarsensors.

Eine weitere Möglichkeit ist die Verwendung eines oder mehrerer, akustischer Sensoren, vorzugsweise mit einem elektro-akustischen Wandler zum Aussenden von akustischen Wellen, insbesondere einen Lautsprecher, und mit einem Mikrofon zum Empfangen akustischer Wellen, insbesondere nach Art eines Ultraschallsensors.

Eine weitere Variante ist die Verwendung eines oder mehrerer, thermischer Sensoren, mit einem wärmesensitiven Element zum Empfangen von Wärmestrahlung, insbesondere nach Art eines Infrarotsensors.

In besonderen Fällen kann es vorteilhaft sein, Sensoren, welche nach unterschiedlichen physikalischen Prinzipien arbeiten, miteinander zu kombinieren, bspw. einen Radarsensor zur Fernüberwachung der Bürstenenden und eine Lichtschranke zur Erkennung von unter der Bürstvorrichtung unbeweglich verharrenden Tieren.

Wenn - wie die Erfindung weiterhin vorsieht - die Bürste(n) samt Antrieb an einem höhenverstellbaren Bürstenkopf angeordnet ist/sind, so ist das Bürsten von Tieren mit unterschiedlicher Körpergröße möglich. Solchenfalls kann wenigstens ein Überwachungssensor an dem höhenverstellbaren Bürstenkopf angeordnet sein. Dort wird die Hubbewegung oder auch ein (Nach-) Schwingen des Bürstenkopfs von dem Sensor nicht wahrgenommen.

Eine bevorzugte Ausführungsform der Erfindung umfaßt zwei Bürsten, wobei die Rotationsachse einer Bürste etwa senkrecht verläuft, die Rotationsachse der anderen Bürste etwa horizontal oder von dem Bürstenkopf aus gesehen leicht ansteigend. Die Rotationsachsen beider Bürsten liegen bevorzugt etwa in einer gemeinsamen, vertikalen Ebene und schneiden sich etwa im Bereich des Bürstenkopfes, so dass dort einerseits die Möglichkeit besteht, beide Bürsten an einen gemeinsamen Antriebsmotor anzukoppeln, bspw. indem die Antriebswellen der beiden Bürsten im Bereich des Schnittpunktes der beiden Rotationsachsen an je eine Abtriebswelle eines Verzweigungs- und/oder Untersetzungsgetriebes angeschlossen sind, an dessen Eingangswelle ein Motor angeschlossen ist, insbesondere ein Elektromotor.

Wenn ein Sensor in der Nähe dieses Schnittpunktes beider Bürstenrotationsachsen angeordnet ist, so wird die Rotation derartiger Bürsten, vorzugsweise mit etwa radial von dem Bürstenkopf weg strebenden Rotationsachsen, außerdem von Sensoren kaum oder gar nicht wahrgenommen, wenn dieselben auf die Erkennung von Bewegungen mit wenigstens einer etwa radial gerichteten Bewegungskomponente optimiert sind, wie bspw. Sensoren mit Auswertung der Dopplerfrequenz, insbesondere bestimmte Radar- oder Ultraschallsensoren.

Wenigstens ein Überwachungssensor sollte ein gerichtetes Empfangsdiagramm aufweisen zur Überwachung eines begrenzten Sektors, so dass unwesentliche Bereiche der Umgebung der Bürstvorrichtung von der Überwachung ausgeschlossen sind und daher auch keine Fehlfunktionen auslösen können.

Mehrere Überwachungssensoren, insbesondere solche mit gerichtetem Empfangsdiagramm, können derart angeordnet sein, dass sie zumindest bereichsweise unterschiedliche Teile der Umgebung der Bürstvorrichtung überwachen. Damit kann der Überwachungsbereich vergrößert und genau an die Geometrie der Bürstvorrichtung angepaßt werden.

Die Erfindung empfiehlt, wenigstens zwei Überwachungssensoren zu verwenden, welche zu beiden Seiten, insbesondere symmetrisch zu, einer vertikalen, von der/den Bürstenrotationsachse(n) aufgespannten Ebene angeordnet sind. Dies läßt sich auf besonders einfachem Wege dadurch realisieren, dass wenigstens zwei Überwachungssensoren einander gegenüber liegend an je einer Flachseite des Bürstenkopfs angeordnet sind, während die Bürste(n) im Bereich (je) einer der zwischen diesen Flachseiten liegenden Stirnseite an dem Bürstenkopf gelagert ist/sind.

Ferner sollten wenigstens zwei Überwachungssensoren derart angeordnet sein, dass ihre Hauptempfangsachsen symmetrisch zu einer vertikalen, von der/den Bürstenrotationsachse(n) aufgespannten Ebene angeordnet sind. Damit wird der Symmetrie der Bürstvorrichtung in Bezug auf eine vertikale, durch die Bürstenrotationsachsen aufgespannte Ebene Rechnung getragen und eine symmetrische Überwachung in beiden Richtungen erzielt.

Dabei können wenigstens zwei Überwachungssensoren derart angeordnet sein, dass ihre Hauptempfangsachsen etwa bzw. nahezu parallel zueinander gerichtet sind oder leicht voneinander divergieren, bspw. unter einem Winkel von nicht mehr als 45°, vorzugsweise von 30° oder weniger, insbesondere 15° oder weniger, die Hauptempfangsachsen sollten jedoch nicht koaxial und insbesondere nicht antiparallel zueinander verlaufen.

Die Ausgänge mehrerer Überwachungssensoren können an einen Baustein zur Überlagerung der Ausgangssignale mehrerer Überwachungssensoren angeschlossen sein, insbesondere einen Addierer. An dessen Ausgang erhält man dann immer ein Signal, unabhängig davon, welcher Überwachungssensor eine Bewegung oder Anwesenheit eines fremden Objektes erkannt hat.

Vorzugsweise werden die ggf. einander überlagerten Ausgangssignale der Überwachungssensoren einem Baustein zugeführt zum Vergleich wenigstens eines Ausgangssignals eines oder mehrerer Überwachungssensoren, oder eines ggf. durch Überlagerung mehrerer Sensor-Ausgangssignale gebildeten Signals, mit einem vorgegebenen Grenz- oder Schwellwert, insbesondere einem Komparator. Diesem obliegt es, geringfügige Störsignale oder von den rotierenden Bürsten herrührende Signale oder von einem geringfügigen Schwingen oder Zittern der Bürstvorrichtung ausgelöste Signale auszumaskieren. Der Grenz- oder Schwellwert kann ggf. einstellbar ausgebildet sein, bspw. mittels eines Potentiometers oder per Software, so dass sich die Ansprechempfindlichkeit den jeweiligen örtlichen Gegebenheiten anpassen läßt.

Durch Verwendung wenigstens eines Bausteins zum Verlängern wenigstens eines Ausgangssignals eines oder mehrerer Überwachungssensoren um einen definierten Zeitwert nach Wegfall eines von einer Bewegung ausgelösten Signalwertes, insbesondere eine monostabile Kippschaltung (Timer) kann eine Ausschaltverzögerung erzeugt werden nach Art einer Hysterese, so dass ein instabiler Schaltzustand mit einem schnellen Schwingen zwischen Aus- und Einschalten vermieden wird.

Schließlich entspricht der Lehre der Erfindung ein Schaltelement zum Ein- und Ausschalten eines Elektromotors zum Antrieb wenigstens einer Bürste, welches mit dem Ausgangssignal wenigstens eines Überwachungssensors gekoppelt ist, vorzugsweise über einen Komparator und/oder einen Timer. Ein solches Schaltelement, insbesondere Relais, verstärkt damit das energiearme Steuersignal auf ein zum Betrieb des Antriebsmotors ausreichendes Energiemaß.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

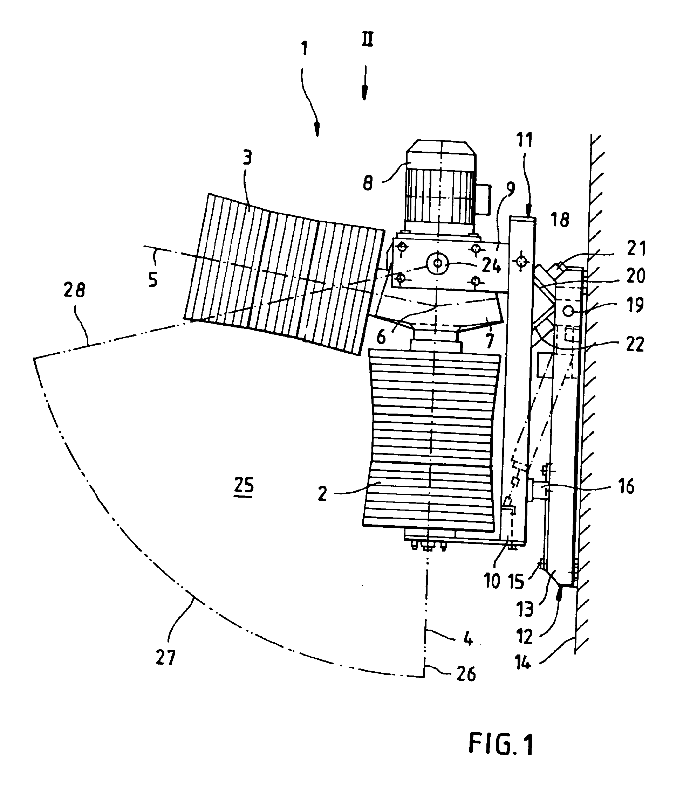

- Fig. 1: eine erfindungsgemäße Vorrichtung in einer Seitenansicht; sowie
- Fig. 2: eine Draufsicht auf die Fig. 1 in Richtung des Pfeils II.

Die markantesten Bestandteile der erfindungsgemäßen Vorrichtung 1 zum Bürsten von Tieren sind die beiden walzenförmigen Bürsten 2, 3. Beide Bürsten 2, 3 rotieren jeweils um ihre betreffende Rotationsachse 4, 5. Die Rotationsachse 4 einer Bürste 2 verläuft etwa vertikal.

Diese Achse 4 wird in ihrem oberen Bereich oberhalb der Bürste 2 geschnitten von der Rotationsachse 5 der anderen Bürste 3. Im Schnittpunkt 6 ist der Zwischenwinkel etwa 100°, derart, dass die zweite Rotationsachse 5 etwa horizontal verläuft bzw. von dem Schnittpunkt 6 ausgehend leicht ansteigt.

Der Zwischenwinkel wird bestimmt durch die Geometrie eines Verzweigungsgetriebes 7, von dessen zwei Abtriebswellen eine vertikal nach unten führt und der Rotationsachse 4 der vertikalen Bürste 2 entspricht, während die andere Abtriebswelle leicht ansteigend aus dem Getriebegehäuse austritt und mit der etwa horizontalen Rotationsachse 5 der anderen Bürste 3 fluchtet. Der Schnittpunkt 6 zwischen den beiden Rotationsachsen 4, 5 liegt dabei im Bereich des Getriebes 7.

Oben auf dem Getriebe 7 befindet sich der Antriebsmotor 8, vorzugsweise ein Elektromotor. An zwei einander gegenüberliegenden Seiten des Getriebes 7 ist je eine Befestigungsplatte 9 befestigt, insbesondere angeschraubt. Die Ebenen der Befestigungsplatten 9 sind vertikal orientiert und außerdem parallel zueinander sowie parallel zu derjenigen vertikalen Symmetrieebene, welche durch die beiden sich schneidenden Rotationsachsen 4, 5 der Bürsten 2, 3 aufgespannt wird. Die Grundfläche der Befestigungsplatten 9 ist vorzugsweise jeweils rechteckig, wobei die jeweils längere Seite sich vorzugsweise in horizontaler Richtung erstreckt und über diejenige Seite des Getriebes 7 überstehend, welche der Bürste 3 mit etwa horizontaler Rotationsachse 5 abgewandt ist.

An den überstehenden Bereich dieser Befestigungsplatten 9 ist ein Träger bzw. Winkeleisen 10 angeschweißt, sich etwa parallel zu der etwa vertikalen Rotationsachse 4 erstreckend, zum überwiegenden Anteil nach unten. Diese beiden Teile 9, 10 bilden ein bewegliches, d.h., höhenverstellbares Chassis 11.

Ein demgegenüber ortsfestes Chassis 12 umfaßt wenigstens ein etwa vertikales Winkeleisen 13, im vorliegenden Beispiel deren zwei, welche durch ein oder vorzugsweise zwei horizontal verlaufende Winkeleisen zu einem in sich starren Rahmen miteinander verbunden sind. Diese(s) Winkeleisen 13 ist/sind an einer Wand 14 mit Schrauben 15 festgeschraubt oder festschraubbar.

An den einander zugewandten Innenseiten der beiden vertikalen Winkeleisen 13 ist in deren unterem Bereich je ein dazu paralleles, d.h., ebenfalls vertikales U-Profil festgelegt, bspw. angeschweißt, und zwar derart, dass die offenen Längsseiten dieser beiden U-Profile einander zugewandt sind. Der zwischen den beiden U-Profilen verbleibende Schlitz hat demnach eine hinterschnittene Geometrie. Eine vergleichbare Konstruktion ergibt sich, wenn anstelle eines oder beider U-Profile je ein Vierkantrohr mit einem Längsschlitz verwendet wird.

Im unteren Bereich des höhenverstellbaren Chassis 11, insbesondere an dessen Winkeleisen 10, ist ein dem feststehenden Chassis 12 zugewandter Fortsatz 16 vorgesehen, der etwa horizontal auskragt. An seinem freien Ende trägt dieser Fortsatz 16 zwei in entgegengesetzte Richtungen weisende, miteinander fluchtende Zapfen, so dass die Konstruktion aus dem Fortsatz 16 einerseits und den beiden Zapfen andererseits etwa die Form eines T hat. Jeder Zapfen greift in die Hinterschneidung je eines U-Profils. Dadurch erfährt das untere Ende des höhenverstellbaren Chassis 11 eine Führung in vertikaler Richtung gegenüber dem unbeweglichen Chassisteil 12. Allerdings lassen die zylindrischen, d.h., querschnittlich kreisrunden Zapfen ein Verschwenken des höhenverstellbaren Chassisteils 11 gegenüber dem unbeweglichen Chassisteils 12 zu.

Damit das höhenverstellbare Chassisteil 11 die vergleichsweise schweren Bürsten 2, 3 tragen kann, ohne um die Zapfen herabzuschwenken, gibt es im oberen Bereich der gegeneinander beweglichen Chassisteile 11, 12 eine weitere Koppelung.

An jedem Chassisteil 11, 12 gibt es je eine Schwenkachse 18, 19. Diese beiden Schwenkachsen 18, 19 sind parallel zueinander und verlaufen etwa lotrecht gegenüber der von den beiden Rotationsachsen 4, 5 der Bürsten 2, 3 aufgespannten Ebene. Die beiden Schwenkachsen 18, 19 sind in je ein oder zwei Augen gelagert, welche in (je) einem Winkeleisen 10, 13 des betreffenden Chassis (-rahmens) 11, 12 vorgesehen sind. Verbunden werden die beiden Schwenkachsen 18, 19 durch eine gerade gestreckte Platte 20 oder Strebe, die an den beiden Achsen 18, 19 angeschweißt ist. Diese Konstruktion erlaubt es dem oberen Teil des höhenverstellbaren Chassisteils 11, um die ortsfeste Achse 19 zu verschwenken. Dieser Schwenkwinkel wiederum wird nach oben begrenzt durch einen Anschlag 21 in Form eines Hartgummiteils, welches an dem ortsfesten Chassis 12 festgelegt ist und am oberen Endpunkt der zulässigen Schwenkbewegung in Kontakt zu der Verbindungsplatte 20 tritt. Um die Schwenkbewegung auch nach unten zu begrenzen, ist unterhalb der Verbindungsplatte 20 ein Winkeleisen oder -blech 22 angeschweißt, mit zwei Schenkeln und einer Zwischenkante, die parallel zu den beiden Schwenkachsen 18, 19 verläuft. Während die beiden Schenkel mit ihren freien Enden bzw. Kanten an der Unterseite der Verbindungsplatte 20 und/oder an einer oder beiden Schwenkachsen 18, 19 festgeschweißt sind, erstreckt sich die Zwischenkante in einem Abstand zu der Verbindungsplatte 20. An dem unteren Schenkel ist unterseitig ein weiterer Anschlag vorgesehen in Form eines zweiten Hartgummiteils. Der untere Endpunkt der zulässigen Schwenkbewegung des höhenverstellbaren Chassisteils 11 ist dann erreicht, wenn das zweite Anschlagelement an dem ortsfesten Chassis 12 zur Anlage gelangt. Sowohl dass bewegliche Chassis 11 als auch das unbewegliche Chassis 12 ist jeweils symmetrisch zu er von den beiden Bürstenrotationsachsen 4, 5 aufgespannten Ebene 23.

Infolge der Überlagerung einer vertikalen Hubbewegung im unteren Bereich des höhenverstellbaren Chassis 11 und einer Schwenkbewegung um eine horizontale Achse 19 im oberen Bereich des höhenverstellbaren Chassis 11 sind die Hub- und die Schwenkbewegung derart miteinander gekoppelt, dass sich die Richtung der Bürstenrotationsachsen 4, 5 bei jeder Höhenverstellung verändert. Diese Kopplung hat zur Folge, dass im unteren Hubbereich die zunächst leicht, d.h., um etwa 10° ansteigende Rotationsachse 5 der oberen, horizontalen Bürste 3 flacher wird, bis die Verbindungsplatte 20 etwa horizontal ausgerichtet ist. Anschließend, d.h. bei einem weiteren Anheben des Bürstenkopfs 2-8, nimmt dieser Winkel wieder zu, die Bürste 3 verläuft wieder steiler. In ähnlicher Form wird die am untersten Punkt der Hubbewegung etwa horizontale Rotationsachse 4 der anderen Bürste 2 zunächst in zunehmendem Maße geneigt, kehrt aber - nachdem die Verbindungsplatte 20 ihre etwa horizontale Position überschritten hat - allmählich wieder in ihre Ausgangslage zurück. Damit richten sich die Bürsten 2, 3 für jedes Tier optimal aus - bei kleineren Tieren bleibt die vertikale Bürstenrotationsachse 4 nahezu senkrecht, bei größeren Tieren weicht der untere Teil gegenüber dem oberen Teil zurück, entsprechend dem dann größeren Bauchumfang im Verhältnis zum Rücken, und bei ganz großen Tieren, wo überwiegend die oberen Körperpartien gebürstet werden, stellt sich die untere Bürste 2 wieder etwa senkrecht.

Während diese Bürstvorrichtung 1 bei Rindern in dieser Form betrieben werden könnte, ist dies in einem Schweinestall nicht ohne weiteres möglich, weil Schweine dazu neigen, bei still stehenden Bürsten 2, 3 deren Borsten anzuknabbem.

Zu diesem Zweck ist an dem beweglichen Bürstenkopf 2-11 zu beiden Seiten der Symmetrieebene 23 je ein Sensor 24 angeordnet. Hierbei kann es sich um einen berührungslosen Sensor handeln, der jedenfalls bei der Annäherung, von Tieren anspricht, bspw. um einen Radarsensor oder um einen sonstigen Bewegungsmelder oder um einen Wärme- bzw. Temperatursensor.

Die Ausgangssignale beider Sensoren 24 werden einem Steuergerät zugeführt, das sich ebenfalls an dem beweglichen Bürstenkopf 2-11 befindet und mindestens ein Schaltelement enthält, welches in die elektrische Verbindung von dem Antriebsmotor 8 zum Stromnetz eingeschleift ist und durch seinen Schaltzustand den Betriebszustand des Antriebsmotors 8 steuert.

Vorzugsweise befindet sich im Rahmen des Steuergeräts zunächst ein Baustein zum Überlagern der Ausgangssignale der beiden Sensoren 24. Hierbei kann es sich um einen Summierer handeln, der die beiden Ausgangssignale spannungsmäßig aufsummiert, oder aber auch um ein ODER-Gatter, welches logische Ausgangssignale von Bewegungsmeidern gemäß der ODER-Funktion miteinander verknüpft.

Das Steuergerät enthält ferner einen Komparator, womit analoge Ausgangssignale der beiden Sensoren 24 mit einem ggf. einstellbaren Schwellwert verglichen werden, um den (gemeinsamen) von den Sensoren 24 überwachten Bereich 25 zu begrenzen und schwache Signale, welche aus größeren Entfernungen stammen, ausmaskieren.

Schließlich ist im Rahmen des Steuergeräts eine Ausschaltverzögerung vorgesehen, um das Schaltelement und damit den Antriebsmotor 8 erst verzögert abzuschalten und nicht gleichzeitig mit dem Wegfall der Sensorausgangssignale.

In der Zeichnung sind mit strichpunktierten Linien 26-29 die Grenzen des von den Sensoren 24 überwachten Bereichs 25 in idealisierter Form wiedergegeben. Man erkennt, dass dieser Bereich etwa die Gestalt eines sektorförmigen Ausschnitts aus einem Diskus, d.h., einer abgeflachten Kugel, hat. Der Außenumfang dieses Diskus wird abschnittsweise durch die Linie 27 repräsentiert, welche dem Äquator des Diskus entlang von dessen kreisförmiger Grundfläche folgt.

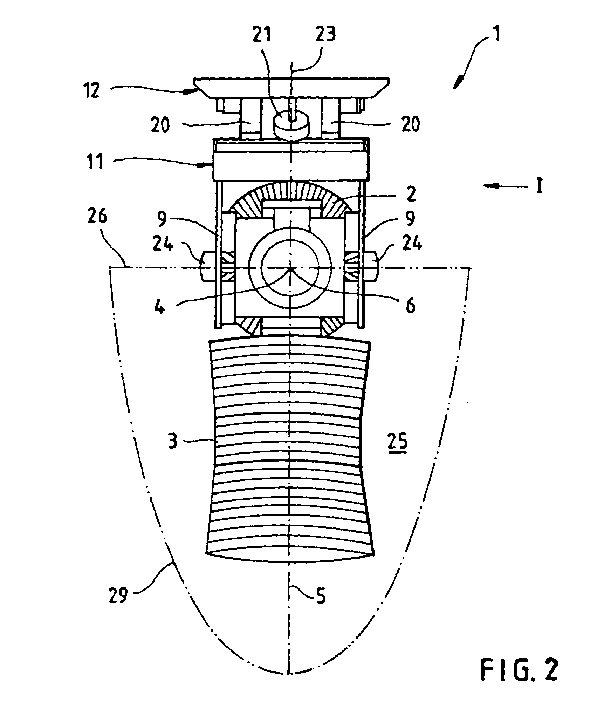

Die Schnittflächen 26 und 28 sind radial zum Zentrum des Diskus hin gerichtet. Dieses Zentrum befindet sich mittig zwischen den beiden Sensoren 24. In Wahrheit sind diese Begrenzungsflächen 26, 28 wohl nicht eben, sondern gewölbt und gehen ohne Knicke in die gewölbte Grenzfläche 29 des überwachten Bereichs 25 über, die in Fig. 2 dargestellt ist. Diese Grenzfläche 29 definiert den Querschnitt durch diesen Überwachungsdiskus, der etwa die Gestalt einer halben Ellipse aufweist.

Vorzugsweise umfaßt der überwachte Bereich 25 vollständig den Raum zwischen den beiden Bürsten 2,3 sowie die jeweils einander zugewandten Bereiche bzw. Hälften der Bürsten 2,3 jeweils zu einem Großteil. Seitlich ragt der diskussektorförmige, überwachte Bereich 25 über den Umfang beider Bürsten 2,3 hinaus, so dass Tiere, insbesondere Schweine, keine Möglichkeit haben, unbemerkt zu einer der Bürsten 2,3 vorzudringen und diese anzuknabbem.

Da sich die beiden Sensoren 24 in der Nähe des Schnittpunkts 6 der beiden Bürstenrotationsachsen 4,5 befinden, vorzugsweise um weniger ändert sich der Abstand zwischen einer Borste und den Sensoren 24 bei der Rotation der Bürsten 2,3 kaum. Sensoren, welche nur die radiale Komponente der Bewegung eines Objektes bzw. eines Oberflächenbereichs eines Objektes zu bzw. von dem betreffenden Sensor 24 erkennen, bspw. nach dem Dopplerverfahren arbeitende Radar- oder Ultraschallsensoren, nehmen daher die rotierenden Bürsten 2,3 kaum als bewegte Objekte wahr; geringe Ausgangssignale werden durch den Schwellwert-Komparator ausmaskiert. Daher ist es einem solchen Sensor 24 möglich, durch die Bürsten 2,3 hindurch zu blicken und deren vom Bürstenkopf 7-11 abgewandte freie Stirnseite zu überwachen, ohne dass der Sensor 24 bei rotierender Bürste 2,3 irritiert würde.

## Patentansprüche

1. Verfahren zum Bürsten von Tieren, insbesondere von Schweinen, mit wenigstens einer rotierenden Bürste (2,3), die motorisch antreibbar ist,
**dadurch gekennzeichnet, dass**
a) ein räumlich begrenztes Umfeld der Bürste(n) (2,3) im Hinblick auf die Anwesenheit und/oder auf Bewegungen von nicht zur Bürstvorrichtung (1) gehörenden Objekten, insbesondere Tieren, überwacht wird, und
b) bei Erfassen einer solchen Bewegung bzw. Annäherung die Bürste(n) (2,3) in Rotation versetzt wird/werden.

2. Verfahren nach Anspruch 1, **dadurch gekennzeichnet, dass** die Bürste(n) (2,3) so lange eingeschaltet bleibt (-en), bis nach dem Sensieren der letzten Bewegung innerhalb des überwachten Bereichs (25) mindestens eine vorgegebene Zeitspanne verstrichen ist.

3. Verfahren nach Anspruch 1 oder 2, **dadurch gekennzeichnet, dass** die Rotationsbewegung der rotierenden Bürste(n) (2,3) nicht als Bewegung interpretiert wird.

4. Verfahren nach einem der vorhergehenden Ansprüche, **dadurch gekennzeichnet, dass** der zu überwachende Bereich durch Vergleichen des Ausgangssignals / der Ausgangssignale eines oder mehrerer Sensoren (24) mit wenigstens einem vorgegebenen Grenzwert und/oder durch Verwendung eines oder mehrerer Sensoren (24) mit gerichteter Charakteristik begrenzt wird.

5. Verfahren nach einem der vorhergehenden Ansprüche, **dadurch gekennzeichnet, dass** zur Überwachung ein oder mehrere, berührungsfreie Sensoren verwendet wird/werden.

6. Verfahren nach einem der vorhergehenden Ansprüche, **dadurch gekennzeichnet, dass** zur Überwachung einer Umgebung der Bürstvorrichtung (1) Lichtstrahlen ausgesandt und empfangen werden, vorzugsweise mittels einer oder mehrerer Lichtschranken, insbesondere mittels eines oder mehrerer Lasersensoren; und/oder es werden dazu elektromagnetische Wellen ausgesandt und empfangen, insbesondere mittels eines oder mehrerer Radarsensoren; und/oder es werden dazu akustische Signale ausgesandt und empfangen, insbesondere mittels eines oder mehrerer Ultraschallsensoren; und/oder es werden dazu Wärmestrahlen empfangen, insbesondere mittels eines oder mehrerer Wärmesensoren, und/oder es wird dazu Infrarotstrahlung empfangen, insbesondere mittels eines oder mehrerer Infrarotsensoren.

7. Verfahren nach einem der vorhergehenden Ansprüche, **dadurch gekennzeichnet, dass** der Bereich um die Bürstvorrichtung (1) mittels mehrerer, insbesondere mittels zweier Sensoren (24) überwacht wird, wobei vorzugsweise die Ausgangssignale mehrerer Sensoren (24) gemeinsam ausgewertet und/oder überlagert werden, insbesondere summiert.

8. Vorrichtung (1) zum Bürsten von Tieren, insbesondere von Schweinen, mit wenigstens einer rotierenden Bürste (2,3), die motorisch antreibbar ist/sind, **gekennzeichnet durch** eine Einrichtung
a) zur Überwachung eines räumlich begrenzten Umfeldes der Bürste(n) (2,3) im Hinblick auf die Anwesenheit und/oder auf Bewegungen von nicht zur Bürstvorrichtung (1) gehörenden Objekten, insbesondere von Tieren, und
b) zum Einschalten der Bürste(n) (2,3) bei Erfassen einer solchen Bewegung bzw. Annäherung innerhalb des überwachten Bereichs (25).

9. Vorrichtung nach Anspruch 8, **gekennzeichnet durch** wenigstens einen, berührungsfreien Sensor zur Überwachung einer Umgebung der Bürstvorrichtung (1) im Hinblick auf die Anwesenheit und/oder Bewegungen von nicht zur Bürstvorrichtung (1) gehörenden Objekten.

10. Vorrichtung nach einem der Ansprüche 8 oder 9, **gekennzeichnet durch** wenigstens einen optischen Sensor zur Überwachung einer Umgebung der Bürstvorrichtung (1) im Hinblick auf die Anwesenheit und/oder Bewegungen von nicht zur Bürstvorrichtung (1) gehörenden Objekten, wobei ein Sensor (24) eine Lichtquelle aufweist zum Aussenden von Lichtwellen, insbesondere -strahlen, und wobei ein Sensor (24) ein lichtsensitives Element zum Empfangen von Lichtwellen, insbesondere -strahlen, aufweist, vorzugsweise nach Art einer Lichtschranke, insbesondere nach Art eines Lasersensors.

11. Vorrichtung nach einem der Ansprüche 8 bis 10, **gekennzeichnet durch** wenigstens einen elektromagnetischen Sensor zur Überwachung einer Umgebung der Bürstvorrichtung (1) im Hinblick auf die Anwesenheit und/oder Bewegungen von nicht zur Bürstvorrichtung (1) gehörenden Objekten, wobei ein Sensor (24) eine Antenne aufweist zum Aussenden von elektromagnetischen Wellen und eine Antenne zum Empfangen von elektromagnetischen Wellen, insbesondere nach Art eines Radarsensors.

12. Vorrichtung nach einem der Ansprüche 8 bis 11, **gekennzeichnet durch** wenigstens einen akustischen Sensor zur Überwachung einer Umgebung der Bürstvorrichtung (1) im Hinblick auf die Anwesenheit und/oder Bewegungen von nicht zur Bürstvorrichtung (1) gehörenden Objekten, wobei ein Sensor (24) einen elektro-akustischen Wandler aufweist zum Aussenden von akustischen Wellen, insbesondere einen Lautsprecher, und ein Mikrofon zum Empfangen akustischer Wellen, insbesondere nach Art eines Ultraschallsensors.

13. Vorrichtung nach einem der Ansprüche 8 bis 12, **gekennzeichnet durch** wenigstens einen thermischen Sensor zur Überwachung einer Umgebung der Bürstvorrichtung (1) im Hinblick auf die Anwesenheit und/oder Bewegungen von nicht zur Bürstvorrichtung (1) gehörenden Objekten, wobei ein Sensor (24) ein wärmesensitives Element aufweist zum Empfangen von Wärmestrahlung, insbesondere nach Art eines Infrarotsensors.

14. Vorrichtung nach einem der Ansprüche 8 bis 13, **dadurch gekennzeichnet, dass** die Bürste(n) (2,3) samt Antrieb (8) an einem höhenverstellbaren Bürstenkopf (2-11) angeordnet ist/sind, wobei wenigstens ein Sensor (24) zur Überwachung einer Umgebung der Bürstvorrichtung (1) im Hinblick auf die Anwesenheit und/oder Bewegungen von nicht zur Bürstvorrichtung (1) gehörenden Objekten an dem höhenverstellbaren Bürstenkopf (2-11) angeordnet ist.

15. Vorrichtung nach einem der Ansprüche 8 bis 14, **dadurch gekennzeichnet, dass** wenigstens ein Überwachungssensor ein gerichtetes Empfangsdiagramm aufweist zur Überwachung eines begrenzten Sektors.

16. Vorrichtung nach einem der Ansprüche 8 bis 15, **gekennzeichnet durch** mehrere, insbesondere zwei Überwachungssensoren, welche derart angeordnet sind, dass sie zumindest bereichsweise unterschiedliche Teile der Umgebung der Bürstvorrichtung (1) überwachen.

17. Vorrichtung nach Anspruch 16, **gekennzeichnet durch** wenigstens einen Baustein zur Überlagerung der Ausgangssignale mehrerer Überwachungssensoren, insbesondere einen Summierer oder Addierer.

18. Vorrichtung nach einem der Ansprüche 8 bis 17, **gekennzeichnet durch** ein Schaltelement zum Ein- und Ausschalten eines Elektromotors (8) zum Antrieb wenigstens einer Bürste (2,3), welches mit dem Ausgangssignal wenigstens eines Überwachungssensors gekoppelt ist, vorzugsweise über einen Baustein zum Vergleich wenigstens eines Ausgangssignals eines oder mehrerer Überwachungssensoren, oder eines ggf. **durch** Überlagerung mehrerer Sensor-Ausgangssignale gebildeten Signals, mit einem vorgegebenen Grenz- oder Schwellwert, insbesondere über einen Komparator, und/oder über einen Baustein zum Verlängern wenigstens eines Ausgangssignals eines oder mehrerer Überwachungssensoren um einen definierten Zeitwert nach Wegfall eines von einer Bewegung ausgelösten Signalwertes, insbesondere über eine monostabile Kippschaltung bzw. Ausschaltverzögerung (Timer).
